# EUROPÄISCHE PATENTSCHRIFT

(11) **EP 3 022 458 B1**
(45) Veröffentlichungstag und Bekanntmachung des Hinweises auf die Patenterteilung: **01.03.2017**
(21) Anmeldenummer: 15723539.1
(22) Anmeldetag: 21.05.2015
(51) Int. Cl.: F16D 65/12

(54) **BREMSSCHEIBEN- /NABENVERBINDUNG**
BRAKE DISC-HUB CONNECTION
LIAISON DISQUE DE FREIN / MOYEU

(30) Priorität: 22.05.2014 DE 102014107228
(43) Veröffentlichungstag der Anmeldung: 25.05.2016
(60) Teilanmeldung: 16166909.8
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE); KOTTEDER, Stephan, 94486 Osterhofen (DE)
(74) Vertreter: Kleine, Hubertus
(86) Internationale Anmeldenummer: PCT/EP2015/061310
(87) Internationale Veröffentlichungsnummer: WO 2015/177299

(56) Entgegenhaltungen:
- EP-A1- 2 207 981
- EP-A2- 1 929 169
- DE-T2- 69 908 785
- DE-U1-202011 052 267

## Beschreibung

Die vorliegende Erfindung betrifft eine Bremsscheiben- /Nabenverbindung gemäß dem Oberbegriff des Anspruchs 1, wie z.B. aus DE-U-20 2011 052 267 bekannt.

Zur Verbesserung der Hitzerissbeständigkeit von Bremsscheiben hat es sich als vorteilhaft herausgestellt, wenn der Reibring der Bremsscheibe sich radial ausdehnen kann und symmetrisch gestaltet ist. Dazu gibt es im Stand der Technik unterschiedliche Vorschläge. So ist aus der DE 109 18 069 A1 eine gattungsgemäße Bremsscheiben- /Nabenverbindung bekannt, bei der die Verbindung der Bremsscheibe mit der Nabe mittels zahnartiger, ineinander greifender Elemente an der Nabe und an der Bremsscheibe erfolgt, die eine Übertragung des Bremsmomentes von der Bremsscheibe auf die Nabe gewährleisten.

Die Zähne weisen hierbei eine starke Keilform auf. Wird die Bremsscheibe thermisch hoch beansprucht, kann es zu inneren Bauteilspannungen kommen, die die Bremsscheibe im Durchmesser geringfügig schrumpfen lassen. Dabei kann die Keilform der Zähne zu einem Klemmen der Bremsscheiben in seiner Verbindung führen, die einerseits die thermische Ausdehnung und außerdem den Service hinsichtlich der Demontage der Bauteile erschwert.

Insbesondere zur leichteren Demontage sind Lösungen aus der DE 10 2009 019 420 A1 oder der oben genannten DE 109 18 069 A1 bekannt, bei denen zwischen den zahnartigen ineinander greifenden Elementen an der Nabe und der Bremsscheibe Zwischenelemente vorgesehen sind, mit denen die Demontage vereinfacht wird.

Zur Reduzierung eines durch einen Bremsvorgang verursachten Wärmeintrags zu reduzieren, ist es beispielsweise aus der DE 10 2008 014 857 A1 bekannt, Zwischenelemente zwischen die Zähne der Bremsscheibe bzw. der Nabe einzufügen, durch die ein direkter Wärmeübergang verhindert wird.

Aufgabe der vorliegenden Erfindung ist es, eine Bremsscheiben- /Nabenverbindung bereitzustellen, mit einer verbesserten Servicefähigkeit sowie weiter reduziertem Wärmeeintrag.

Diese Aufgabe wird durch eine Bremsscheibe- /Nabenverbindung mit den Merkmalen des Anspruchs 1 gelöst.

Vorteilhafte Weiterbildungen der Erfindung sind den Unteransprüche zu entnehmen.

Bei der erfindungsgemäßen Bremsscheiben- /Nabenverbindung, bei der eine Nabe sich in axialer Richtung zu einer Bremsscheibe und der Nabe gemeinsamen Drehachse von einem Radflansch der Nabe erstreckende Mitnehmer aufweist, die zwischen einem inneren Umfang einer Bremsscheibe sich in Richtung der Drehachse ersteckende angeordnete Stützelemente zahnartig eingreifen, sind seitliche Flanken der Mitnehmer radial zur Drehachse oder parallel zur Radialen und seitliche Flanken der Stützelemente parallel zu den seitlichen Flanken der Mitnehmer ausgerichtet, wobei die seitlichen Flanken jedes der Mitnehmer in einem Winkel von 15° bis 30° zueinander ausgerichtet sind. Bevorzugt sind die seitlichen Flanken jedes der Mitnehmer von der Drehachse (A) aus betrachtet in einem Winkel von 15° bis 30° zueinander ausgerichtet.

Durch die radiale oder zumindest annähernd radiale Ausrichtung der seitlichen Flanken der Mitnehmer zur Drehachse wird eine Bremsscheiben- /Nabenverbindung geschaffen, bei welcher in der Schnittstelle zwischen Nabe und Bremsscheibe die Bremskräfte nahezu ausschließlich reine Normalkräfte auftreten.

Durch die Orientierung der seitlichen Flanken der Mitnehmer der Nabe derart, dass sich deren Tangenten im Drehmittelpunkt der Nabe bzw. innerhalb einer Kreisfläche, deren Mittelpunkt der Drehmittelpunkt der Nabe ist, treffen und bei korrespondierender Ausgestaltung der seitlichen Flanken der Bremsstützelemente der Bremsscheibe wird das Bremsmoment als nahezu reine Normalkraft in dieser Verzahnung übertragen. Die Tangenten der seitlichen Flanken der Stützelemente der Bremsscheibe treffen sich daher entweder ebenfalls in der Drehachse, oder - bei einer Verwendung von Zwischenelementen, welche Gegenstand einiger Unteransprüche sind - auf oder in einem Kreis mit dem zweifachen Durchmesser der entsprechenden zweifachen Dicke der Zwischenelemente.

Die derart geänderte Zahnform der Mitnehmer und der Stützelemente verringert auch den Keileffekt der Bremsscheibenverzahnung und dadurch das Klemmen der Bremsscheibe.

Die Ausrichtung der seitlichen Flanken jedes der Mitnehmer in einem Winkel von 15° bis 30° gewährleistet die Übertragung großer Bremsmomente. Die Breite der Mitnehmer in Umfangsrichtung ist damit durch die Größe des Winkels zwischen den seitlichen Flanken des Mitnehmers definiert. Je größer dieser Winkel ist, desto steifer ist die Zahnverbindung.

Allerdings wird mit größer werdendem Winkel der Zwischenraum zwischen zweien solcher Mitnehmer, der zur Belüftung der Bremsscheibe zur Verfügung steht, kleiner. Es hat sich herausgestellt, dass ein die Breite der Mitnehmer bestimmender Winkel zwischen 15° und 30° hinsichtlich der notwendigen Steifigkeit zur Bremsmomentübertragung und einem ausreichend großem Zwischenraum zur Belüftung der Bremsscheibe optimal ist.

Besonders bevorzugt sind die seitlichen Flanken jedes der Mitnehmer von der Drehachse aus betrachtet dabei in einem Winkel von 23° bis 25°, insbesondere von 24°, zueinander ausgerichtet.

Die Mitnehmer sind gemäß einer Ausführungsvariante als vordere Enden von sich axial von dem Radflansch weg erstreckenden Abstützstegen ausgebildet.

Gemäß einer bevorzugten Ausführungsvariante der Erfindung ist an wenigstens einer der seitlichen Flanken jedes der Mitnehmer ein Aufschiebeanschlag zur axialen Fixierung der Bremsscheibe angeformt. Dies ermöglicht die Einsparung zusätzlicher Bauteile und Montageaufwand an der Nabe und/oder der Bremsscheibe zur axialen Fixierung der Bremsscheibe an der Nabe.

Gemäß Anspruch 1 weist jeder der Abstützstege sich von dem Mitnehmer axial in Richtung des Radflansches erstreckende Schlitze zur Ausbildung seitlicher Stützstege auf, wobei die Stirnseiten der freien Enden der Stützstege als Aufschiebeanschlag zur axialen Fixierung der Bremsscheibe ausgebildet sind.

Durch die dadurch gebildete thermische Trennung zwischen dem Aufschiebeanschlag, an dem im Betrieb die bei einem Bremsvorgang erhitzten Stützelemente der Bremsscheibe anliegen, und dem jeweiligen Mitnehmer ist eine Reduktion von Spannungen aufgrund der unterschiedlichen Temperaturen der Bremsscheibe gegenüber der Nabe ermöglicht.

Nach einer weiteren Ausführungsvariante der erfindungsgemäßen Bremsscheiben- /Nabenverbindung sind in Zwischenräumen zwischen den seitlichen Flanken der Mitnehmer und der Stützelemente erste Zwischenelemente angeordnet, die die Mitnehmer radial und in Umfangsrichtung u-förmig umgreifen und zumindest an den einander gegenüberstehenden Flanken der Mitnehmer flächig anliegen. Die u-förmige Ausgestaltung dieser Zwischenelemente ermöglicht dabei eine besonders einfache Montage.

Nach einer weiteren bevorzugten Ausführungsvariante sind zwischen den seitlichen Flanken der Stützelemente und den an den seitlichen Flanken der Mitnehmer anliegenden Schenkeln der ersten Zwischenelemente separat zwischen den ersten Zwischenelementen montierbare zweite Zwischenelemente angeordnet.

Diese zweiten Zwischenelemente sind besonders bevorzugt als Winkelelemente mit zwei winklig, insbesondere rechtwinklig zu einander ausgerichteten Schenkeln ausgebildet, wobei im montierten Zustand ein erster Schenkel zwischen der seitlichen Flanke eines der Stützelemente und der seitlichen Flanke eines der ersten Zwischenelemente eingeklemmt ist und ein zweiter Schenkel an der den Radflansch der Nabe angewandten Stirnseite des Stützelementes anliegt.

Durch das Einbringen von zwei separaten Zwischenelementen zwischen den Flanken der Mitnehmer und der Stützelemente ist eine nochmals verbesserte thermische Isolation zwischen der Bremsscheibe und der Nabe ermöglicht. Des Weiteren tragen zwei solche separat montierbare Zwischenelemente auch zur Verbesserung der Servicefähigkeit (insbesondere beim Austausch der Bremsscheibe) bei.

Um eine Anhaftung der beiden aneinander liegenden Zwischenelemente durch Feuchtigkeitseinwirkung zu vermeiden, bestehen die ersten und zweiten Zwischenelemente bevorzugt aus einem nicht rostenden Material oder sind mit einer nicht rostenden Beschichtung versehen, so dass die ersten und zweiten Zwischenelemente sowohl beim Ein- als auch beim Ausbau einfach montiert bzw. demontiert werden können.

Zusätzlich weisen solche nicht rostenden Materialien bzw. nicht rostende Beschichtungen einen geringen Reibungskoeffizienten auf, was im Servicefall ein leichtes axiales Verbinden der Bremsscheibe ermöglicht.

Nach einer weiteren bevorzugten Ausführungsvariante bilden die ersten Zwischenelemente im Bereich der Bremsscheiben- /Nabenverbindung eine Trennschicht zwischen der Bremsscheibe und der Nabe aus. Dazu sind besonders bevorzugt die freien Enden der sich etwa radial zur Drehachse hin erstreckenden Schenkel der ersten Zwischenelemente als nach außen umgebogene und sich axial zur Drehachse erstreckende Trennstege ausgebildet, auf denen jeweils eine sich axial zur Drehachse erstreckende Unterseite der Stützelemente oder eine Unterkante des ersten Schenkels des zweiten Zwischenelementes abstützbar ist.

Zusätzlich sind bevorzugt an den seitlichen Schenkeln der ersten Zwischenelemente auf einer dem Radflansch der Nabe zugewandten Seite parallel zur Ebene der Bremsscheibe ausgerichtete Trennflächen angeformt, die einen an der Nabe angeformten, zur Drehachse axialen Aufschiebeanschlag zur axialen Fixierung der Bremsscheibe gegenüber der Bremsscheibe abdeckt.

Durch die mit derartigen Vorsprüngen ausgestalteten ersten Zwischenelemente ist eine verbesserte Wärmeisolation der Bremsscheibe von der Nabe gewährleistet, da die Bremsscheibe durch das auf dem Mitnehmer der Nabe aufgesetzte erste Zwischenelement in allen Kontaktflächen zur Nabe isoliert ist.

Nach einer weiteren bevorzugten Ausführungsvariante sind die Übergänge zwischen den Trennstegen und den sich etwa radial zur Drehachse hin erstreckenden Schenkeln der ersten Zwischenelemente als Einbuchtungen ausgebildet, in denen jeweilige Unterkanten des ersten Schenkels der zweiten Zwischenelemente einliegend abstützbar sind.

Dadurch sind die Unterkanten des ersten Schenkels der zweiten Zwischenelemente in zur Drehachse der Bremsscheibe umfänglicher Richtung zusätzlich gegen Verrutschen gesichert.

Bevorzugt sind das erste und das zweite Zwischenelement formschlüssig miteinander verbunden. Besonders bevorzugt sind an einem den seitlichen Schenkeln der ersten Zwischenelemente nahen Bereichen der Trennflächen Öffnungen ausgebildet, durch die sich im montierten Zustand jeweils eine Nase eines der zweiten Zwischenelemente erstreckt, wobei die Nase sich von dem dem zweiten Schenkel beabstandeten Ende des ersten Schenkels erstreckt.

Dadurch ist ein zur Drehachse der Bremsscheibe radiales Auswandern der zweiten Zwischenelemente nach Montage an den ersten Zwischenelementen wirksam verhindert.

Zur axialen Sicherung der Zwischenelemente ist gemäß einer weiteren bevorzugten Ausführungsvariante an einer dem Radflansch der Nabe abgewandten Seite der Mitnehmer ein Federelement befestigbar.

Um eine ausreichende Belüftung der Bremsscheibe zu erreichen, weist die Nabe bevorzugt insgesamt drei, vier oder fünf Mitnehmer auf und die Bremsscheibe entsprechend sechs, acht oder zehn Stützelemente.

Dadurch ist insbesondere ermöglicht, größere Aussparungen zwischen den Stützelementen der Bremsscheibe (im Vergleich zu denen aus dem Stand der Technik bekannten Bremsscheiben mit deutlich größerer Anzahl von Stützelementen) zu schaffen, wodurch der Kühlluftquerschnitt deutlich vergrößert ist.

Gemäß einer weiteren bevorzugten Ausführungsvariante weist die Nabe einen sich radial zur Drehachse nach außen erstreckenden Radflansch auf, von dem sich die Mitnehmer axial zur Drehachse erstrecken.

In einer bevorzugten Ausführungsvariante weist die Nabe einen topfartigen, hohlzylindrischen Abschnitt auf, der in den sich radial zur Drehachse nach außen erstreckenden Radflansch übergeht, wobei die Mitnehmer durch sich von dem topfartigen Abschnitt radial nach außen erhebende und axial zum Radflansch hin erstreckende Stege abgestützt ist.

Die axiale Erstreckung der Mitnehmer weg von dem Radflansch der Nabe trägt dabei ebenfalls zur besseren Wärmeisolation der Bremsscheibe von der Nabe bei.

Ausführungsbeispiele der Erfindung werden nachfolgend anhand der beigefügten Zeichnungen näher beschrieben. Es zeigen:
- Figur 1: eine perspektivische Ansicht einer Nabe mit einer Bremsscheibe und mit einer Bremsscheiben- /Nabenverbindung;
- Figur 2: eine Draufsicht auf die Bremsscheibe- /Nabenverbindung aus Figur 1 mit Darstellung der Geometrie der Mitnehmer der Nabe bzw. der Stützelemente der Bremsscheibe und der daraus resultierenden Kräfte;
- Figur 3: eine Draufsicht auf eine Ausführungsvariante einer in den Figuren 1 und 2 gezeigten Bremsscheibe;
- Figur 4: eine perspektivische Ansicht einer Ausführungsvariante einer Nabe mit daran angeordneten Mitnehmern;
- Figur 5: eine perspektivische Ansicht einer Ausführungsvariante eines ersten Zwischenelementes;
- Figur 6: eine perspektivische Detailansicht eines auf einen der Mitnehmer der Nabe aufgesetzten ersten Zwischenelements;
- Figur 7: eine Schnittansicht der Bremsscheiben- /Nabenverbindung mit montierten Zwischenelementen;
- Figur 8: eine Draufsicht auf die Bremsscheibe- /Nabenverbindung mit montierten ersten und zweiten Zwischenelementen;
- Figur 9: eine perspektivische Ansicht von oben auf die Nabe mit auf die Mitnehmer montierten ersten und zweiten Zwischenelementen sowie diese haltenden Federelementen;
- Figur 10: eine perspektivische Ansicht der Bremsscheibe und der Nabe im montierten Zustand mit fünf Mitnehmern;
- Figur 11: eine perspektivische Ansicht einer mit fünf Mitnehmern ausgebildeten Nabe;
- Figur 12: eine Draufsicht auf die Bremsscheibe aus Figur 10 mit entsprechend zehn Stützelementen;
- Figur 13: eine perspektivische Ansicht einer Nabe mit darauf montierter Bremsscheibe mit alternativer Ausgestaltung der Nabe;
- Figur 14: eine perspektivische Ansicht einer teilweise aufgeschnittenen Bremsscheibe- /Nabenverbindung entsprechend Figur 13,
- Figur 15: eine perspektivische Ansicht der in Figur 13 und 14 gezeigten Nabe,
- Figur 16: eine perspektivische Ansicht einer weiteren Ausführungsvariante einer mit fünf Mitnehmern ausgebildeten Nabe mit montierten ersten und zweiten Zwischenelementen;
- Figur 17: eine perspektivische Detailansicht der in Figur 16 gezeigten Nabe ohne am Mitnehmer montierten ersten und zweiten Zwischenelementen;
- Figur 18: eine perspektivische Detailansicht der in Figur 16 gezeigten Nabe entsprechend Figur 17 mit am Mitnehmer montierten ersten und zweiten Zwischenelementen;
- Figuren 19 bis 21: perspektivische Ansichten des in den Figuren 16 und 18 gezeigten ersten und zweiten Zwischenelementes;
- Figur 22: eine Draufsicht auf die in den Figuren 19 bis 21 gezeigten ersten und zweiten Zwischenelemente; und
- Figur 23 und 24: perspektivische Ansichten einer weiteren Ausführungsvariante einer mit fünf Mitnehmern ausgebildeten Nabe ohne Zwischenelemente.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsscheibe, Nabe, Stützelemente, Mitnehmer, Zwischenelemente und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

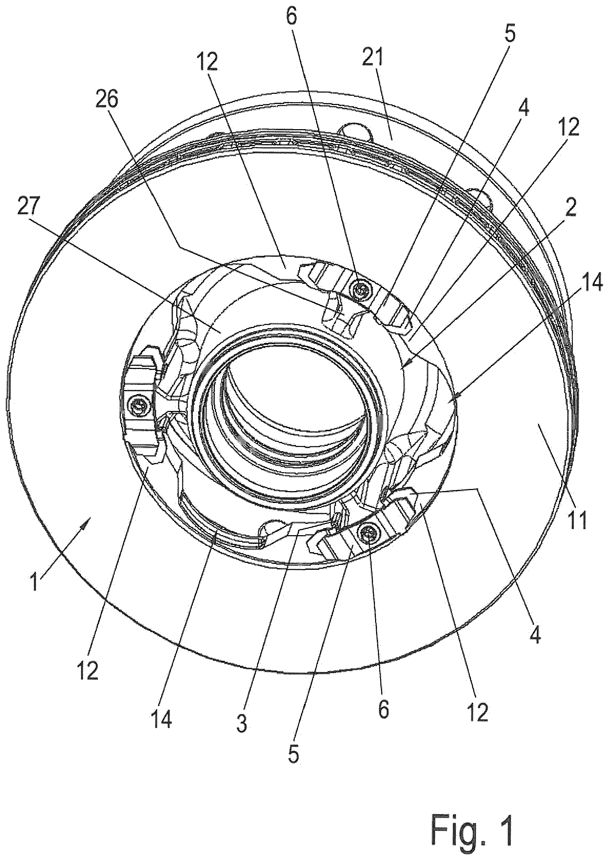

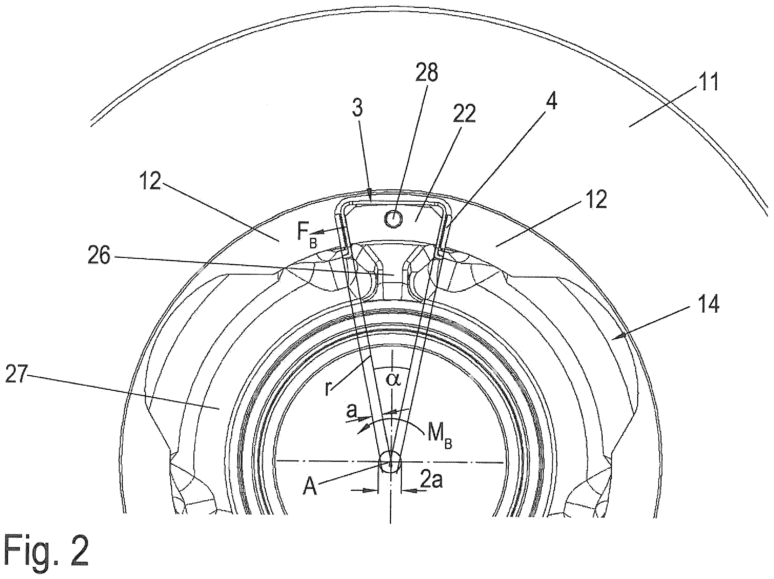

In Figur 1 ist eine Bremsscheibe- /Nabenverbindung darstellt, die zur Verbindung einer ringförmigen innen belüfteten Bremsscheibe 1 mit einer Nabe 2 dient, welche als Bremsscheiben/Nabe gegebenenfalls auch in Verbindung mit der Funktion einer Radnabe ausgebildet ist, auf die die Bremsscheibe 1 axial aufschiebbar ist bzw. aufgesetzt worden ist. Die Bremsscheibe 1 und die Nabe 2 weisen dabei, wie beispielsweise in Figur 2 gezeigt ist, eine gemeinsame Drehachse A auf.

Die Bremsscheibe 1 ist dabei vorzugsweise als innen belüftete Bremsscheibe ausgebildet, mit zwei Reibringen 11, die über Stege und am Innenumfang über einen umlaufenden Ringabschnitt miteinander verbunden sind.

Zur Drehmomentübertragung, insbesondere bei Bremsvorgängen, sind am Innenumfang der Bremsscheibe 1 sich radial nach innen erstreckende, abständig zueinander angeordnete und gleichmäßig über den Umfang verteilte Zähne - Stützelemente 12 genannt - angeformt.

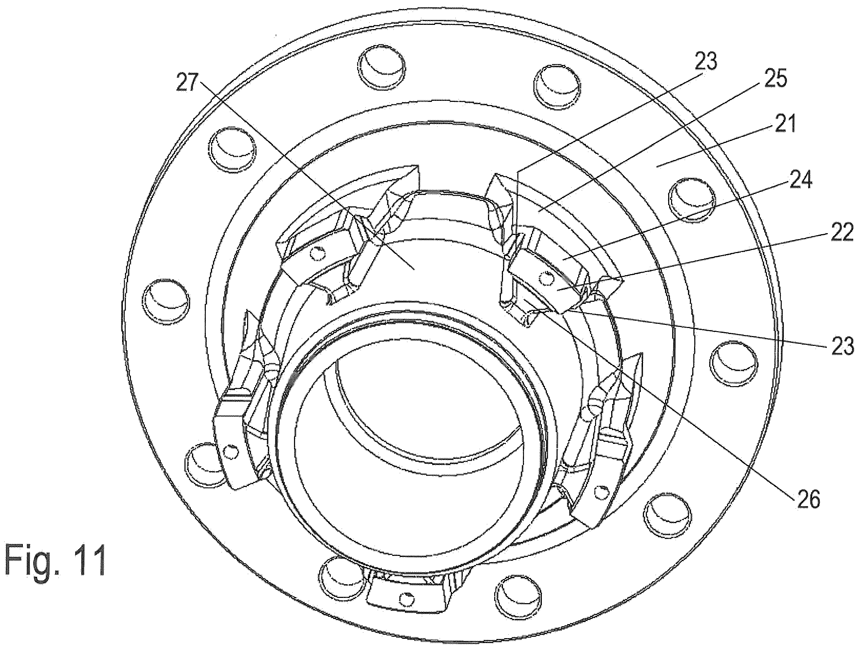

Die Nabe 2 kann dabei unterschiedlich ausgebildet sein. So ist beispielsweise in den Figuren 1, 4, 10, 11 eine Nabe 2 gezeigt mit einem topfartigen, hohlzylindrischen Abschnitt 27 und einem sich radial zur Drehachse A nach außen erstreckenden Radflansch 21, von dem sich Mitnehmer 22 axial zur Drehachse A erstrecken. Am Außenumfang des hohlzylindrischen Abschnitts 27 sind zur Abstützung der Mitnehmer 22 sich axial zum Radflansch 21 hin erstreckende Stege 26 angeformt.

Die Mitnehmer 22 sind dabei bevorzugt als vordere Enden von Abstützstegen 25 ausgebildet, wobei die Abstützstege 25 sich axial vom Radflansch 21 weg erstrecken. Die umfängliche Breite der Abstützstege 25 ist dabei vorzugsweise größer als die umfängliche Breite der Mitnehmer 22.

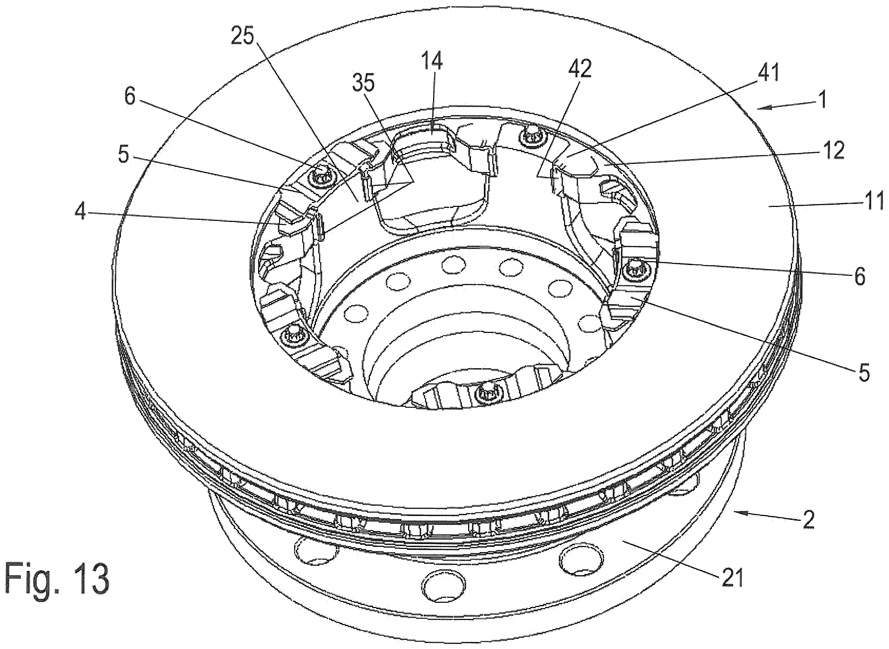

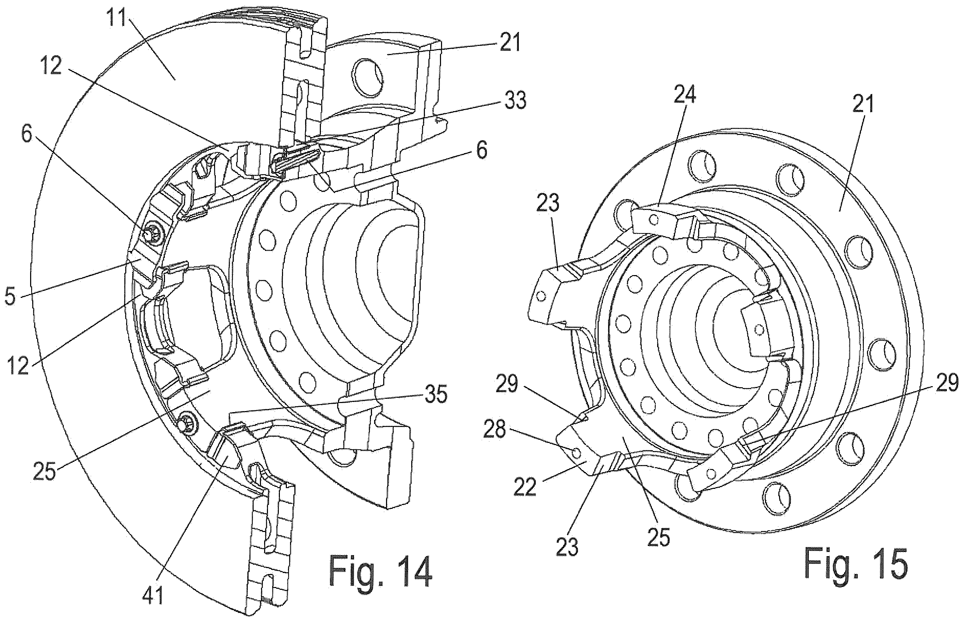

Bei der Bremsscheibe- /Nabenverbindung entsprechend der Figuren 13 bis 15 erstrecken sich die Mitnehmer 22 ebenfalls von dem Radflansch 21 axial nach vorn, sind aber nicht an ihrer Unterseite über entsprechende Stege 26 an einem hohlzylindrischen Abschnitt 27 der Nabe abgestützt, sondern stehen frei in axialer Richtung hervor.

Die Mitnehmer 22 der Nabe 2 korrespondieren dabei im Sinne eine Verzahnung mit den Stützelementen 12 am Innenumfang der Bremsscheibe 1. Die Mitnehmer 22 greifen dabei jeweils in Umfangsrichtung in den Freiraum (Aussparungen 13) zwischen zwei benachbarten Stützelementen 12 ein.

Wie in Figur 2 gut zu erkennen ist, sind die Mitnehmer 22 derart ausgebildet, dass sie sich radial von innen nach außen aufweiten. Die sich radial und axial zur Drehachse A erstreckenden seitlichen Flanken 23 der Mitnehmer 22 sind dabei von der Drehachse A aus betrachtet in einem Winkel α von 15° bis 30°, bevorzugt von 20° bis 30° zueinander ausgerichtet. Dieser Winkel α und der radiale Abstand der Mitnehmer 22 von der Drehachse A bestimmen dabei die Breite der Mitnehmer 22 in Umfangsrichtung. Denkbar ist auch, dass die seitlichen Flanken 23 der Mitnehmer 22 sich parallel versetzt, bevorzugt um wenige Millimeter, zu einer Radialen zur Drehachse A erstrecken.

Die seitlichen Flanken 15 der Stützelemente 12 sind dabei parallel zu den seitlichen Flanken 23 der Mitnehmer 22 ausgerichtet. Derart wird auf einfache Weise eine Bremsscheiben- /Nabenverbindung geschaffen, bei der in der Schnittstelle an den Flanken 15, 23 der Stützelemente 12 bzw. der Mitnehmer 22 die Bremskräfte f_{B} anders als nach dem Stand der Technik nur als reine oder zumindest nahezu reine Normalkräfte auftreten.

Zur axialen Fixierung der Bremsscheibe 1 ist nach einer bevorzugten Ausführungsvariante an wenigstens einer der seitlichen Flanken 23 jedes der Mitnehmer 22 der Nabe 2 ein Aufschiebeanschlag 29 angeformt, gegen den die Bremsscheibe 1 im montierten Zustand gedrückt wird, wie weiter unten noch näher erläutert wird.

Die seitlichen Flanken 15 der Stützelemente 12 können dabei entweder direkt an den seitlichen Flanken 23 der Mitnehmer 22 anliegen oder, gemäß der beispielsweise in Figur 2 gezeigten Ausführungsvariante, jeweils an ersten Zwischenelementen 3 oder zweiten Zwischenelementen 4 anliegen, die in entsprechenden Zwischenräumen zwischen den Stützelementen 12 und den Mitnehmern 22 in Umfangsrichtung ausgebildet sind.

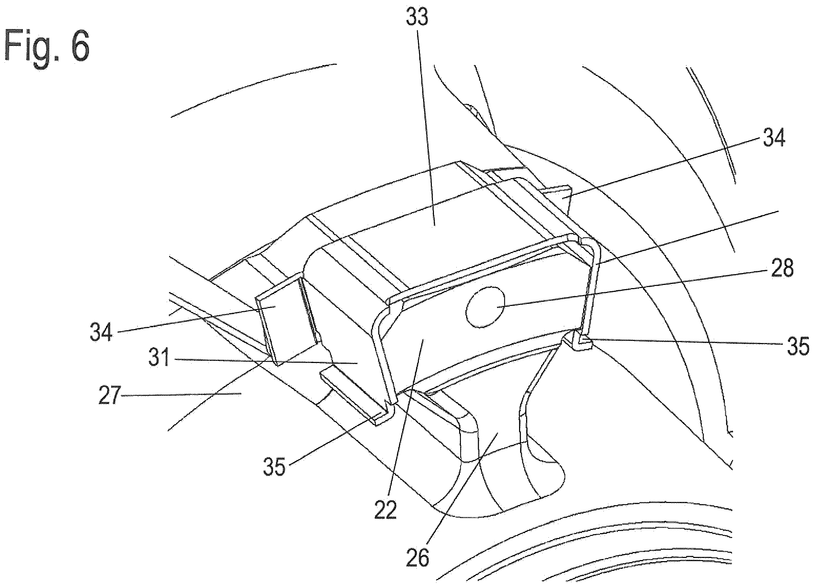

Die ersten Zwischenelemente 3 umgreifen dabei die Mitnehmer 22 radial außen und in Umfangsrichtung und liegen dabei zumindest an den einander gegenüberstehenden Flanken 23 der Mitnehmer 22 flächig an, wie es in Figur 6 gezeigt ist.

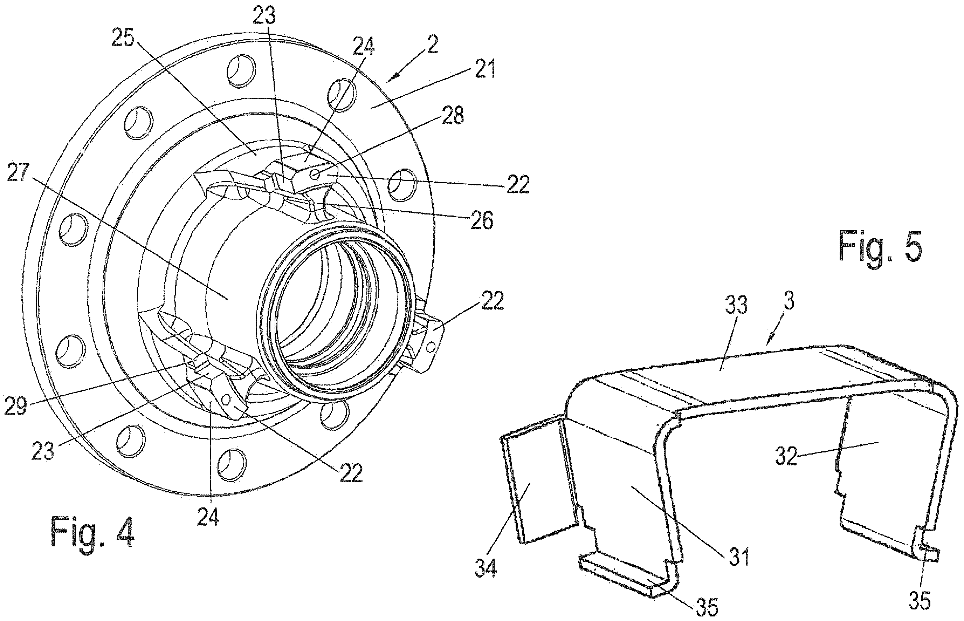

Eine Ausführungsvariante der ersten Zwischenelemente 3 ist in einer perspektivischen Darstellung in Figur 5 gezeigt. Wie in Figur 5 zu erkennen ist, bestehen die ersten Zwischenelemente 3 dabei aus einem im wesentlichen u-förmig geformten Körper mit jeweiligen im montierten Zustand an den seitlichen Flanken 23 der Mitnehmer 22 anliegenden Schenkeln 31, 32, die über ein Brückenelement 33, das wie in Figur 2 erkennbar, zumindest teilweise auf der radial außen liegenden oberen Fläche 24 des Mitnehmers 22 aufliegt, miteinander verbunden sind.

Gemäß der in Figur 5 gezeigten bevorzugten Ausführungsvariante sind die freien Enden der sich radial zur Drehachse A hin ersteckenden Schenkel 31, 32 dieser ersten Zwischenelemente 3 als nach außen umgebogene und sich axial zur Drehachse A erstreckende Trennstege 35 ausgebildet, auf denen jeweils eine sich axial zur Drehachse A erstreckende Unterseite 16 der Stützelemente 12 oder eine Unterkante des ersten Schenkels 42 eines zweiten Zwischenelementes 4, was weiter unten noch näher erörtert wird, abstützbar ist.

Die beiden sich etwa radial zur Drehachse A hin ersteckenden Schenkel 31, 32 der ersten Zwischenelemente sind entsprechend der Ausrichtung der seitlichen Flanken 23 der Mitnehmer 22 in einem Winkel α von 15° bis 30° zueinander ausgerichtet. In einer besonders bevorzugten Ausführungsvariante sind die seitlichen Flanken 23 der Mitnehmer 22 und dem entsprechend auch die Schenkel 31, 32 der ersten Zwischenelemente 3 von der Drehachse A aus betrachtet in einem Winkel α von 20° bis 30°, besonders bevorzugt von 23° bis 25°, insbesondere von 24° zueinander ausgerichtet.

Dieser Winkel von 15° bis 30° hat sich als besonders geeignet herausgestellt, einerseits hinsichtlich der damit einhergehenden Breite der Mitnehmer 22 und der damit einhergehenden Tragkraft zur Aufnahme des anliegenden Bremsmomentes und andererseits hinsichtlich der verbleibenden Zwischenräume, die, bevorzugt bei Vorsehung von drei, vier oder fünf in Umfangsrichtung gleich verteilten Mitnehmern 22 auf der Nabe 2, ausreichend groß sind, um eine hinreichende Belüftung der Bremsscheibe 1 zu ermöglichen.

Wie in Figur 5 des weiteren erkennbar ist, sind an den seitlichen Schenkeln 31, 32 der ersten Zwischenelemente 3 auf einer dem Radflansch 21 der Nabe 2 zugewandten Seite parallel zur Ebene der Bremsscheibe 1 ausgerichtete Trennflächen 34 angeformt, die die an der Nabe 2 angeformten, zur Drehachse A axialen Aufschiebeanschläge 29 zur axialen Fixierung der Bremsscheibe 1 abdeckt, wie in Figur 6 dargestellt ist.

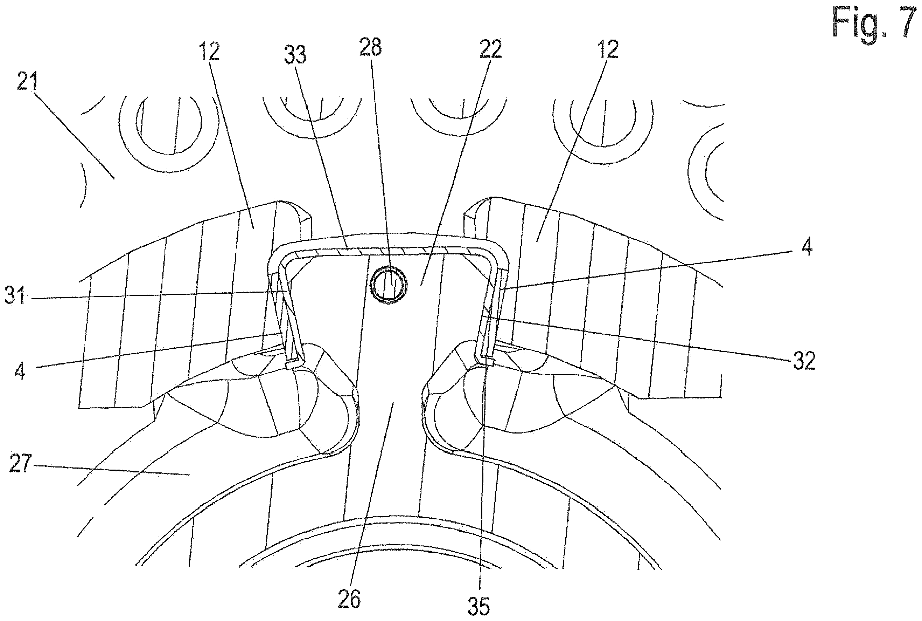

Wie beispielsweise in den Figuren 1, 2 und 7 bis 9 gut erkennbar ist, sind zwischen den seitlichen Flanken 15 der Stützelemente 12 und an den seitlichen Flanken 23 der Mitnehmer 22 anliegenden Schenkeln 31, 32 der ersten Zwischenelemente 3 separat zu den ersten Zwischenelementen 3 montierbare zweite Zwischenelemente 4 angeordnet, um die Bremsscheibe 1 von der Nabe 2 zusätzlich thermisch zu isolieren.

Die Vorsehung zweier separat montierbarer Zwischenelemente 3, 4 zur thermischen Isolierung der Bremsscheibe 1 von der Nabe 2 hat den weiteren Vorteil, dass diese in einfacher Weise montierbar und insbesondere auch in einfacher Weise wieder demontierbar sind, beispielsweise wenn die Bremsscheibe ausgetauscht werden soll.

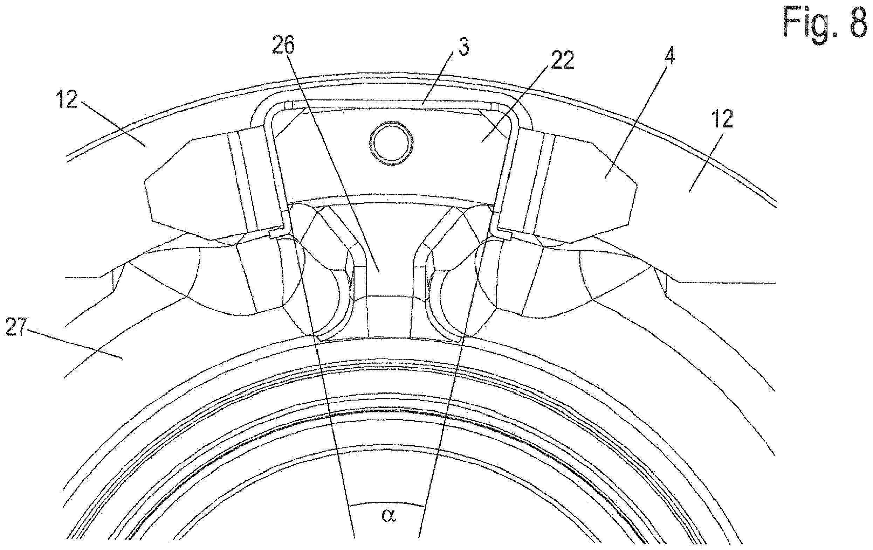

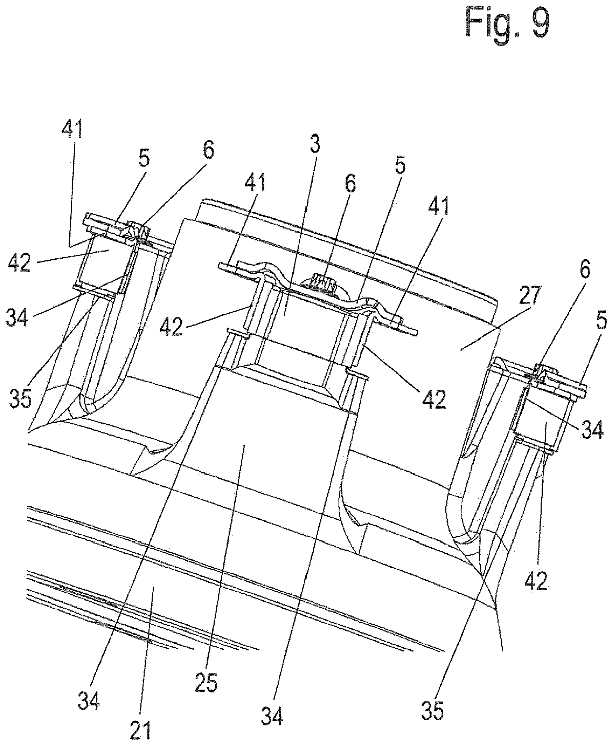

Das erste Zwischenelement 3 und das jeweils zweite Zwischenelement 4 sind dabei bevorzugt formschlüssig miteinander verbunden. Die zweiten Zwischenelemente 4 sind dabei, wie in den Figuren 8 und 9 gut erkennbar ist, bevorzugt als Winkelelemente mit zwei winklig, insbesondere rechtwinklig zueinander ausgerichteten Schenkeln 41, 42 ausgebildet.

Im montierten Zustand ist ein erster Schenkel 42 zwischen der seitlichen Flanke 15 eines der Stützelemente 12 und der seitlichen Flanke 31, 32 eines der ersten Zwischenelemente 3 eingeklemmt. Ein zweiter Schenkel 41 liegt an der dem Radflansch 21 der Nabe abgewandten Stirnseite des Stützelementes 12 an.

Die ersten Zwischenelemente 3 und bevorzugt auch die zweiten Zwischenelemente 4 sind bevorzugt aus einem nicht rostenden Material gefertigt oder alternativ oder zusätzlich mit einer nicht rostenden Beschichtung versehen, um ein Anhaften der aneinander liegenden Flächen der ersten Zwischenelemente 3 und der zweiten Zwischenelemente 4 dauerhaft zu verhindern, so dass bei der Demontage der Bremsscheibe im Servicefall ein leichtes axiales Verschieben der Bremsscheibe nach vorne, d. h. weg von dem Radflansch 21 der Nabe 2, ermöglicht ist. Auch eine Anti-Seize-Beschichtung der Zwischenelemente 3, 4 ist denkbar.

Durch die Formgestalt insbesondere der ersten Zwischenelemente 3 bilden diese im Bereich der Bremsscheiben- /Nabenverbindung eine Trennschicht zwischen der Bremsscheibe 1 und der Nabe 2 aus, so dass die Bremsscheibe 1 an keiner Stelle im Bereich der Bremsscheiben- /Nabenverbindung mit der Nabe direkt in Berührung steht.

Zur axialen Fixierung der Bremsscheibe 1 an der Nabe 2 und der gegebenenfalls im Bereich der Bremsscheiben- /Nabenverbindung angeordneten ersten Zwischenelemente 3 und/oder zweiten Zwischenelemente 4 ist an einer den Radflansch 21 der Nabe 2 abgewandten Seite der Mitnehmer 22 ein Federelement 5 befestigbar, beispielsweise mit einer Schraube 6 in einer Schraubbohrung 28 im Mitnehmer 22 verschraubt.

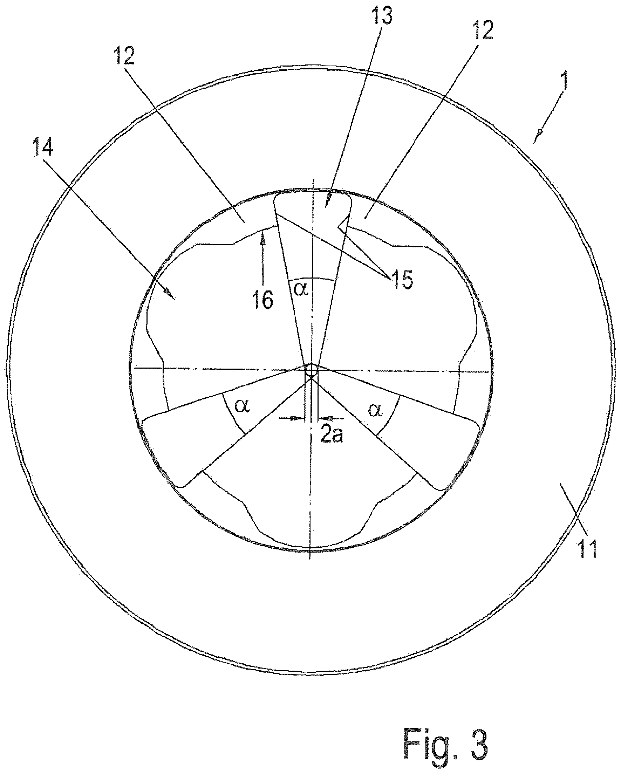

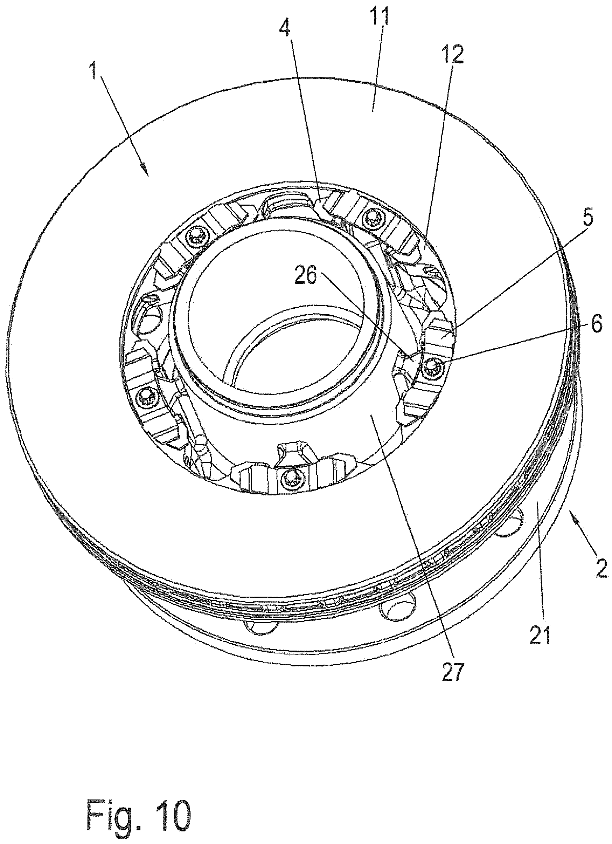

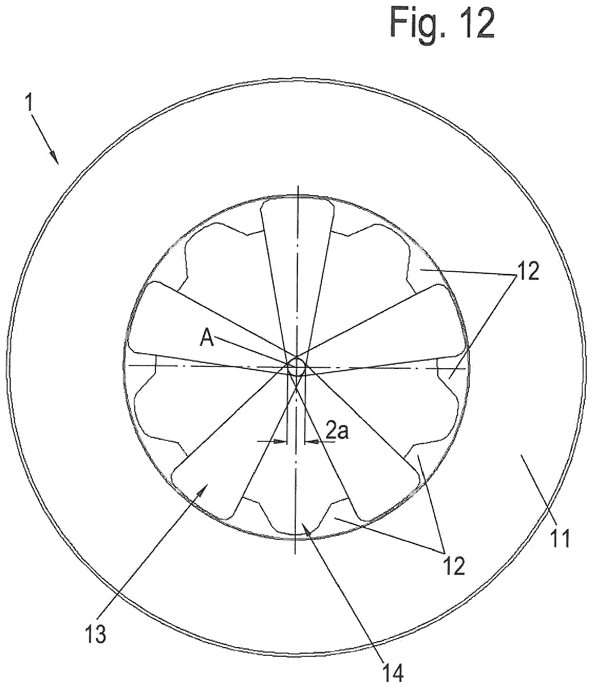

Während die in den Figuren 1 bis 4 und 9 gezeigte Nabe 2 bzw. Bremsscheibe 1 insgesamt drei Mitnehmer 22 bzw. sechs Stützelemente 12 aufweist, ist es auch denkbar, die Bremsscheibe- /Nabenverbindung so auszubilden, dass eine Nabe insgesamt vier oder fünf Mitnehmer 22 aufweist und die Bremsscheibe 1 dementsprechend acht oder zehn Stützelemente 12 aufweist, wie es in den Figuren 10 bis 15 gezeigt ist.

Bei einer Verzahnung mit einer derartigen Anzahl von ineinander greifenden Mitnehmern 22 bzw. Stützelementen 12 ist in optimaler Weise eine zuverlässige Bremsmomentübertragung ermöglicht, bei gleichzeitig hinreichend groß dimensionierten Aussparungen 14 am Innenumfang der Bremsscheibe 1, durch die eine hinreichende Belüftung der Bremsscheibe 1 und der Nabe 2 ermöglicht ist.

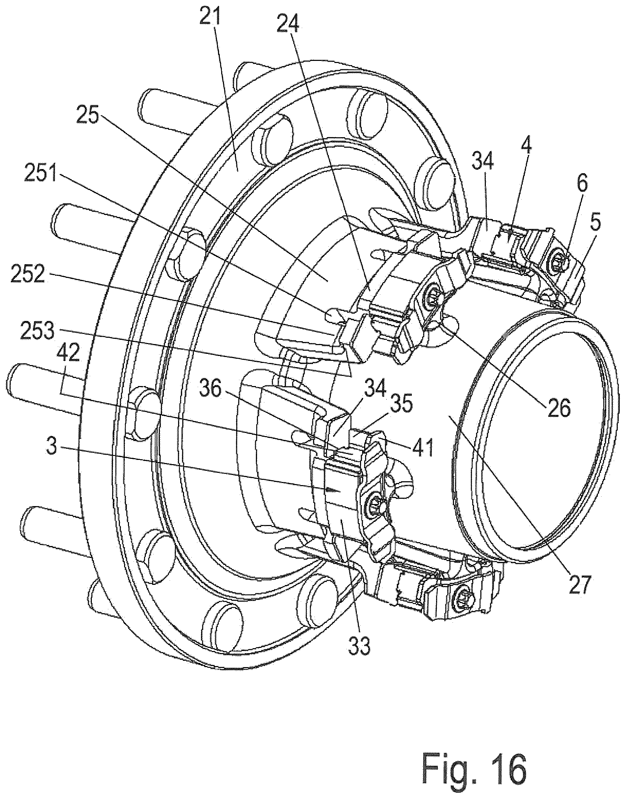

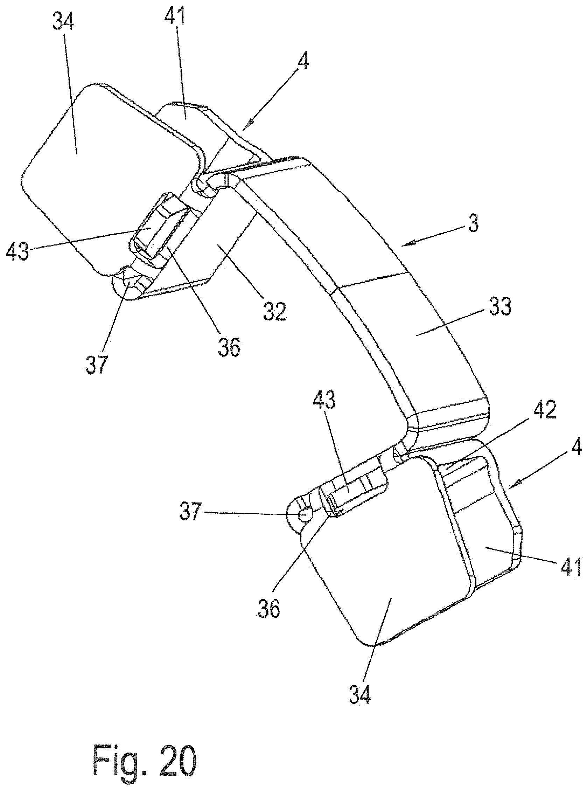

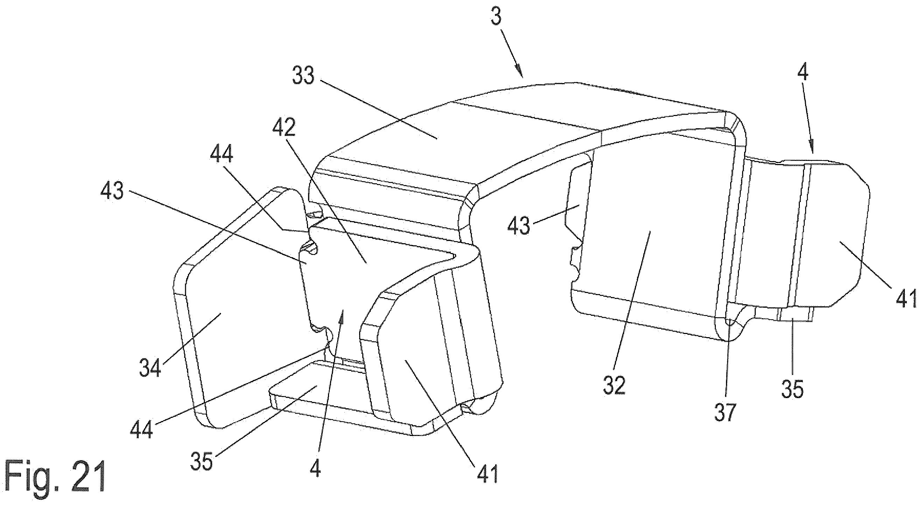

Eine weitere Ausführungsvariante der Bremsscheiben- /Nabenverbindung mit alternativ ausgestalteten Stützstreben 25 sowie ersten und zweiten Zwischenelementen 3, 4 ist in den Figuren 16 bis 22 gezeigt.

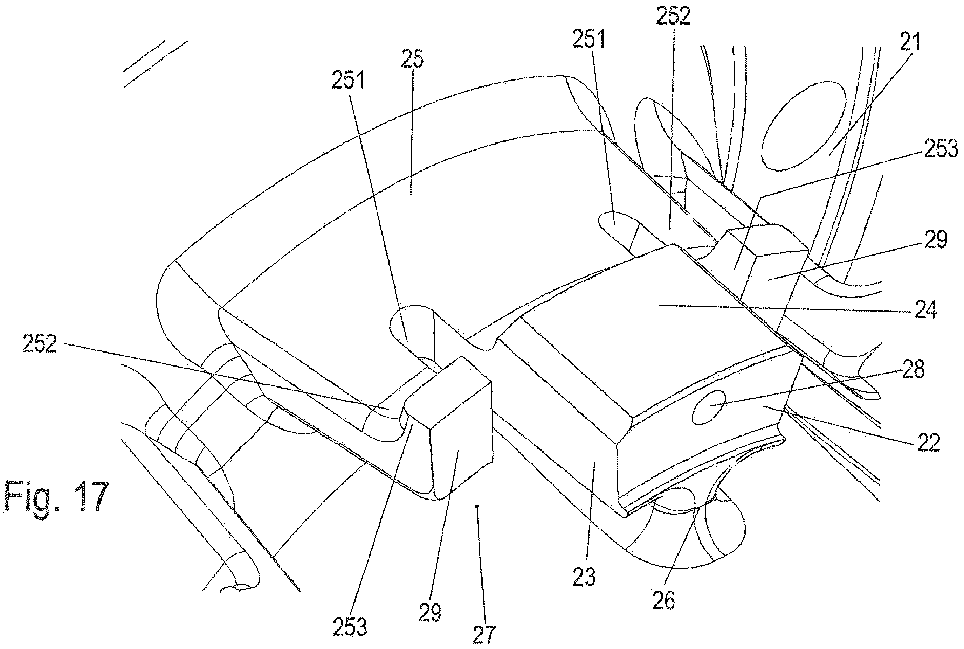

Wie insbesondere in Figur 17 zu erkennen ist, weisen die Abstützstege 25 sich von dem Mitnehmer 22 axial in Richtung des Radflansch 21 erstreckende Schlitze 251 auf. Diese Schlitze 251 erstrecken sich dabei bevorzugt in Verlängerung der seitlichen Flanken 23 der Mitnehmer 22. Die durch einen jeweiligen Schlitz 251 vom zentralen Bereich der Abstützstege 25 getrennten seitlichen Stützstege 252 sind an ihren freien Enden 253 bevorzugt radial zur Drehachse der Bremsscheibe 1 I-förmig umgebogen ausgebildet, so dass die der Bremsscheibe 1 bzw. den ersten Zwischenelementen 3 zugewandten Stirnseiten eine relativ zum Querschnitt der Stützstege 252 vergrößerte Fläche aufweisen. Die Stirnseiten der Stützstege dienen dabei als axialen Aufschiebeanschläge 29 zur axialen Fixierung der Bremsscheibe 1. Durch die Trennung der so ausgebildeten axialen Aufschiebeanschläge 29 lassen sich thermisch bedingte Spannungen in der Nabe 2 vermeiden, insbesondere im Übergangsbereich zwischen den seitlichen Flanken 23 der Mitnehmer 22 und den Aufschiebeanschlägen 29.

Die axiale Länge der Schlitze 251 beträgt dabei vorzugsweise mehr als 10 mm, besonders bevorzugt zwischen 15 mm und 17 mm.

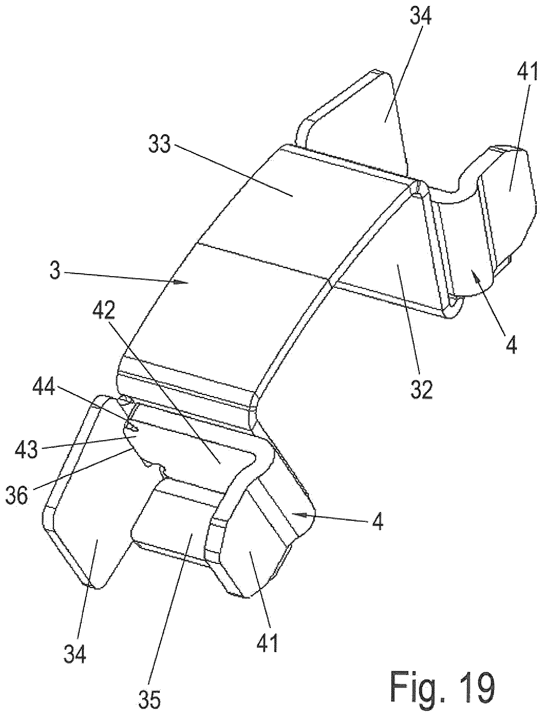

Wie in den Figuren 19 bis 21 gezeigt ist, sind bei den in diesen Figuren gezeigten Ausführungsvarianten der ersten und zweiten Zwischenelemente 3, 4 zur Sicherung der zweiten Zwischenelemente 4 gegen umfängliches Verrutschen die Übergänge zwischen den Trennstegen 35 und den sich etwa radial zur Drehachse der Bremsscheibe 1 hin erstreckenden Schenkeln 31, 32 der ersten Zwischenelemente 3 als Einbuchtungen 37 ausgebildet, in denen jeweilige Unterkanten des ersten Schenkels 42 der zweiten Zwischenelemente 4 einliegend abstützbar sind.

Um ein zur Drehachse der Bremsscheibe 1 radiales Auswandern der zweiten Zwischenelemente 4 nach deren Montage an den ersten Zwischenelementen 3 wirksam zu verhindern, sind an einem den seitlichen Schenkeln 34 der ersten Zwischenelemente nahen Bereichen der Trennflächen bevorzugt schlitzförmig ausgebildete Öffnungen 36 vorgesehen, durch die sich im montierten Zustand jeweils eine Nase 43 eines der zweiten Zwischenelemente 4 erstreckt. Die Nase 43 erstreckt sich dabei von dem dem zweiten Schenkel 41 des zweiten Zwischenelementes 4 beabstandeten Ende des ersten Schenkels 42 des zweiten Zwischenelementes 4, bevorzugt geradlinig.

Die Breite der Nase 43 (radial zur Drehachse der Bremsscheibe1) ist dabei bevorzugt kleiner als die Breite des ersten Schenkels 42 des zweiten Zwischenelementes 4. Die über die Seitenränder der Nase 43 überstehenden Randbereiche 44 des ersten Schenkels 42 dienen dabei als Anschlag, um bei der Montage die Eindringtiefe der Nase 43 in die Öffnung 36 des ersten Zwischenelementes 3 zu begrenzen.

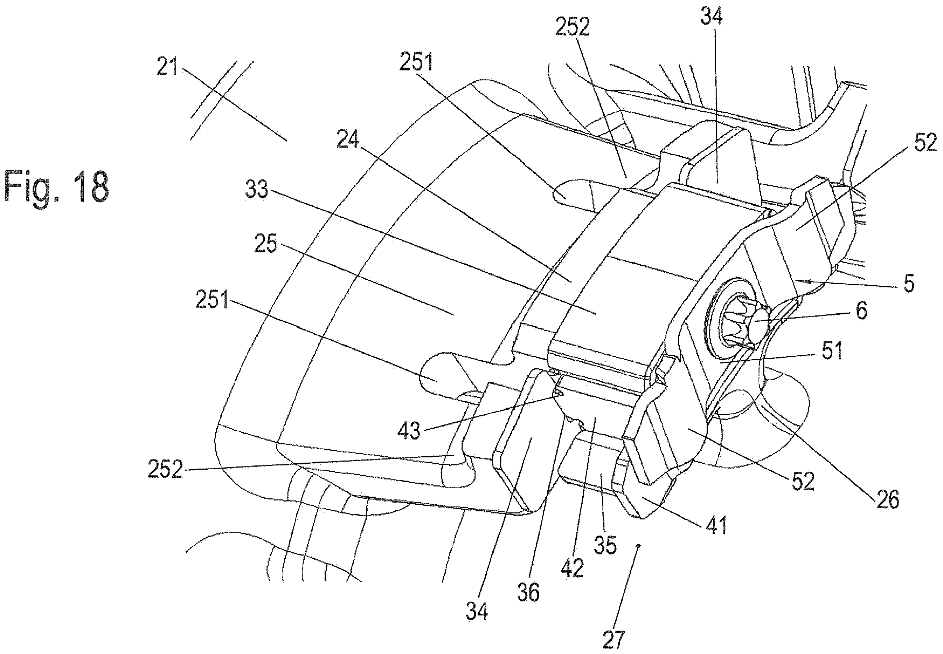

Figur 18 zeigt in einer perspektivischen Ansicht die ersten und zweiten Zwischenelemente 3, 4 im an der Nabe 2 montierten Zustand. Gut zu erkennen ist, dass die Nasen 43 der zweiten Zwischenelemente 4 durch die Öffnungen 36 der ersten Zwischenelemente 3 sich bis in die Schlitze 251 der Abstützstege 25 erstrecken.

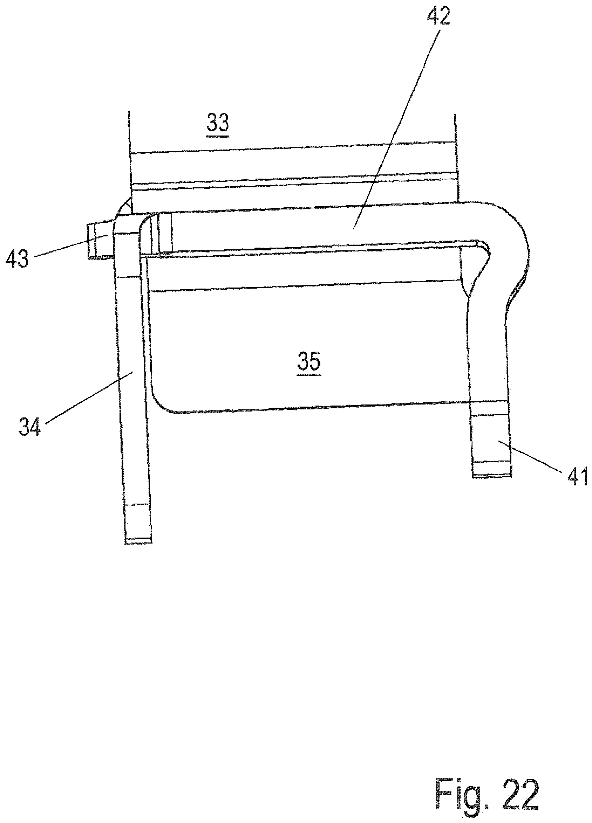

Figur 22 zeigt in einer Draufsicht die in die Öffnung 36 des ersten Zwischenelementes 3 eingedrungene Nase 43 eines der zweiten Zwischenelemente 4.

Die anhand der Figuren 16 bis 22 dargestellten Ausführungsvarianten erläuterten Merkmale betreffend die Schlitze 251, Einbuchtungen 37, Öffnungen 36 und Nasen 43 sind dabei auch bei der in den Figuren 13 bis 15 gezeigten Nabe 2 denkbar.

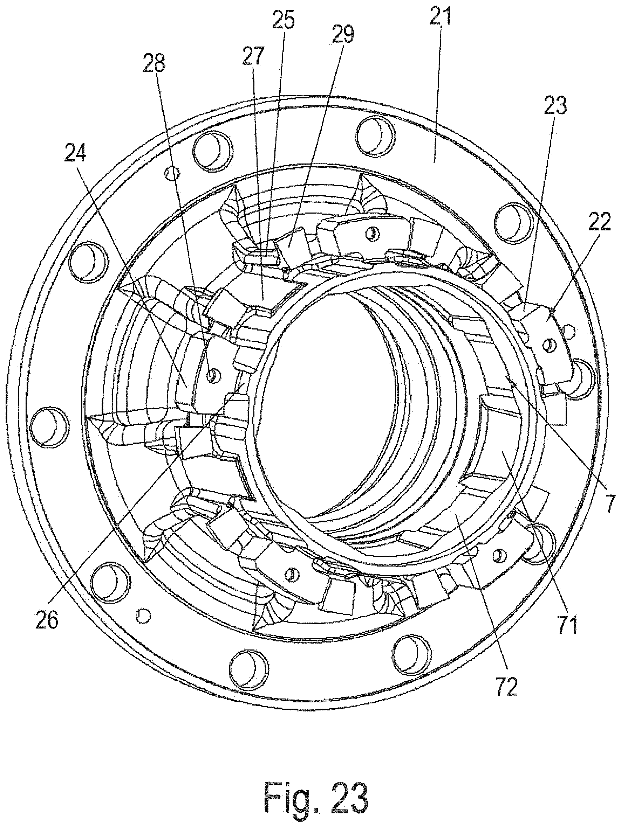

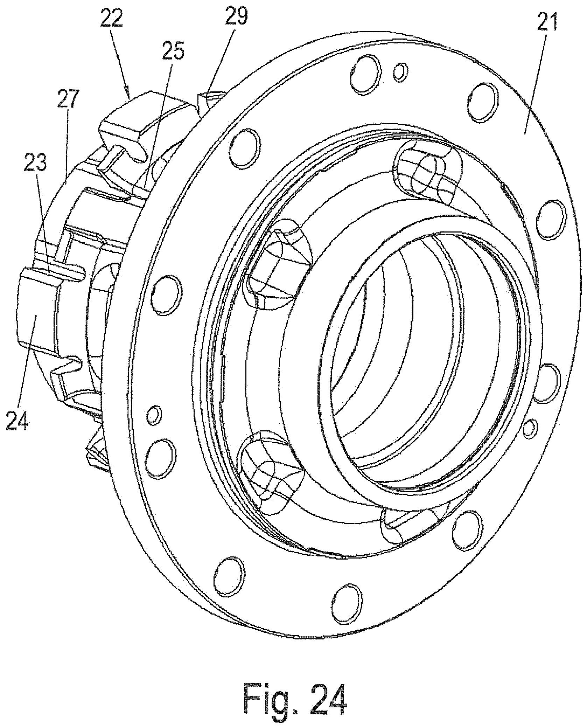

Eine weitere Ausführungsvariante der Bremsscheiben- /Nabenverbindung mit alternativ ausgestalteten Stützstreben 25 sowie ersten und zweiten Zwischenelementen 3, 4 ist in den Figuren 23 und 24 gezeigt. Diese Ausführungsvariante eignet sich insbesondere zur Anbringung an einer Hinterachse eines Nutzfahrzeugs.

Wie in beiden Figuren 23 und 24 zu erkennen ist, erstrecken sich die Abstützstege 25 bei dieser Ausführungsvariante von den Aufschiebeanschläge 29 axial in Richtung des Radflansches 21. Nahe den Aufschiebeanschlägen 29 weiten sich die Abstützstege 25 in Umfangsrichtung der Nabe 2 auf. Die Flanken 23 der Mitnehmer 22 sind dabei durch die Schlitze 251 von den Aufschiebeanschlägen 29 getrennt. Auch hier erstrecken sich die Schlitze 251 in Verlängerung der seitlichen Flanken 23 der Mitnehmer 22.

Die Innenfläche der Nabe 2 ist hier mit einer Innenkontur 7 ausgebildet. Diese Innenkontur weist in der hier gezeigten Ausführungsvariante Ausnehmungen 71 sowie Erhebungen 72 auf, die in Umfangsrichtung alternierend nebeneinander angeformt sind. Die Innenkontur 7 dient dabei der Verzahnung mit einer Achse, insbesondere einer Hinterachse des Nutzfahrzeugs.

### Bezugszeichenliste

- 1: Bremsscheibe
- 11: Reibring
- 12: Stützelemente
- 13: Aussparung
- 14: Aussparung
- 15: Flanken
- 16: Unterseite

- 2: Nabe
- 21: Radflansch
- 22: Mitnehmer
- 23: Flanken
- 24: obere Fläche
- 25: Stützstrebe
- 251: Schlitz
- 252: Schenkel
- 253: freies Ende
- 26: Stege
- 27: topfartiger Abschnitt
- 28: Schraubbohrung
- 29: Aufschiebeanschlag

- 3: erstes Zwischenelement
- 31: Schenkel
- 32: Schenkel
- 33: Brückenelement
- 34: Tennfläche
- 35: Trennstege
- 36: Öffnung
- 37: Vertiefung

- 4: zweites Zwischenelement
- 41: zweiter Schenkel
- 42: erster Schenkel
- 43: Nase
- 44: Randbereich

- 5: Federelement
- 51: zentraler Bereich
- 52: Federschenkel
- 6: Schraube

- 7: Innenkontur
- 71: Ausnehmung
- 72: Erhebung

- A: Drehachse
- f_{B}: Bremskraft

## Patentansprüche

1. Bremsscheiben- /Nabenverbindung, wobei eine Nabe (2) sich in axialer Richtung zu einer einer Bremsscheibe (1) und der Nabe (2) gemeinsamen Drehachse (A) von einem Radflansch (21) der Nabe (2) erstreckende Mitnehmer (22) aufweist, die zwischen am inneren Umfang einer Bremsscheibe (1) sich in Richtung der Drehachse (A) erstreckende angeordnete Stützelemente (12) zahnartig eingreifen, wobei seitliche Flanken (23) der Mitnehmer (22) radial oder zumindest annähernd radial zur Drehachse (A) und seitliche Flanken (15) der Stützelemente (12) parallel zu den seitliche Flanken (23) der Mitnehmer (22) ausgerichtet sind, wobei die seitlichen Flanken (23) jedes der Mitnehmer (22) in einem Winkel (α) von 15° bis 30° zueinander ausgerichtet sind, **dadurch gekennzeichnet dass** jeder der Mitnehmer (22) sich axial in Richtung des Radflansches (21) erstreckende Schlitze (251) zur Ausbildung seitlicher Stützstege (252) aufweist, wobei die Stirnseiten der freien Enden (253) der Stützstege (252) als Aufschiebeanschlag (29) zur axialen Fixierung der Bremsscheibe (1) ausgebildet sind.

2. Bremsscheiben- /Nabenverbindung nach Anspruch 1, **dadurch gekennzeichnet, dass** am Innenumfang der Bremsscheibe (1) in Umfangsrichtung betrachtet zwischen von einem jeweiligen Mitnehmer (22) entfernten Seitenflanken zweier Stützelemente (12) jeweils eine zur Belüftung der Bremsscheibe (1) und der Nabe (2) dienende Aussparung (14) ausgeformt ist.

3. Bremsscheiben- /Nabenverbindung nach einem der vorstehenden Ansprüche, **dadurch gekennzeichnet, dass** die Mitnehmer (22) als vordere Enden von sich axial von dem Radflansch (21) weg erstreckenden Abstützstegen (25) ausgebildet sind.

4. Bremsscheiben- /Nabenverbindung nach einem der vorstehenden Ansprüche, **dadurch gekennzeichnet, dass** an wenigstens einer der seitlichen Flanken (23) jedes der Mitnehmer (22) ein Aufschiebeanschlag (29) zur axialen Fixierung der Bremsscheibe (1) angeformt ist.

5. Bremsscheiben- /Nabenverbindung nach einem der vorstehenden Ansprüche, **dadurch gekennzeichnet, dass** in Zwischenräumen zwischen den seitliche Flanken (15, 23) der Mitnehmer (22) und der Stützelemente (12) erste Zwischenelemente (3) angeordnet sind, die die Mitnehmer (22) radial und in Umfangsrichtung u-förmig umgreifen und zumindest an den einander gegenüberstehenden Flanken (23) der Mitnehmer (22) flächig anliegen.

6. Bremsscheiben- /Nabenverbindung nach Anspruch 5, **dadurch gekennzeichnet, dass** zwischen den seitlichen Flanken (15) der Stützelemente (12) und an den seitlichen Flanken (23) der Mitnehmer (22) anliegenden Schenkeln (31, 32) der ersten Zwischenelemente (3) separat zu den ersten Zwischenelementen (3) montierbare zweite Zwischenelemente (4) angeordnet sind.

7. Bremsscheiben- /Nabenverbindung nach Anspruch 6, **dadurch gekennzeichnet, dass** die ersten Zwischenelemente (3) und die zweiten Zwischenelementen (4) axial zur Drehachse (A) zueinander verschiebbar angeordnet sind.

8. Bremsscheiben- /Nabenverbindung nach Anspruch 6 oder 7, **dadurch gekennzeichnet, dass** die zweiten Zwischenelemente (4) als Winkelelemente mit zwei winklig, insbesondere rechtwinklig zueinander ausgerichteten Schenkeln (41, 42) ausgebildet sind, wobei im montierten Zustand ein erster Schenkel (42) zwischen der seitlichen Flanke (15) eines der Stützelemente (12) und der seitlichen Flanke (31, 32) eines der ersten Zwischenelemente (3) eingeklemmt ist und ein zweiter Schenkel (41) an der dem Radflansch (21) der Nabe (2) abgewandten Stirnseite des Stützelementes (12) anliegt.

9. Bremsscheiben- /Nabenverbindung nach einem der Ansprüche 6 bis 8, **dadurch gekennzeichnet, dass** die ersten Zwischenelemente (3) und die zweiten Zwischenelemente (4) aus einem nicht rostenden Material bestehen oder mit einer nicht rostenden Beschichtung versehen sind und oder einer Anti-Seize-Beschichtung aufweisen.

10. Bremsscheiben- /Nabenverbindung nach einem der Ansprüche 5 bis 9, **dadurch gekennzeichnet, dass** die ersten Zwischenelemente (3) im Bereich der Bremsscheiben/Nabenverbindung eine Trennschicht zwischen der Bremsscheibe (1) und der Nabe (2) bilden.

11. Bremsscheiben- /Nabenverbindung nach Anspruch 10, **dadurch gekennzeichnet, dass** die freien Enden der sich etwa radial zur Drehachse (A) hin erstreckenden Schenkel (31, 32) der ersten Zwischenelemente (3) als nach außen umgebogene und sich axial zur Drehachse (A) erstreckende Trennstege (35) ausgebildet sind, auf denen jeweils eine sich axial zur Drehachse (A) erstreckende Unterseite (16) der Stützelemente (4) oder eine Unterkante des ersten Schenkels (42) des zweiten Zwischenelementes (4) abstützbar ist.

12. Bremsscheiben- /Nabenverbindung nach Anspruch 11, **dadurch gekennzeichnet, dass** die Übergänge zwischen den Trennstegen (35) und den sich etwa radial zur Drehachse (A) hin erstreckenden Schenkeln (31, 32) als Einbuchtungen (37) ausgebildet ist, in der die Unterkante des ersten Schenkels (42) des zweiten Zwischenelementes (4) einliegend abstützbar ist.

13. Bremsscheiben- /Nabenverbindung nach einem der Ansprüche 10 bis 12, **dadurch gekennzeichnet, dass** an den seitlichen Schenkeln (31, 32) der ersten Zwischenelemente (3) auf einer dem Radflansch (21) der Nabe (2) zugewandten Seite parallel zur Ebene der Bremsscheibe (1) ausrichtete Trennflächen (34) angeformt sind, die jeweils einen der Aufschiebeanschläge (29) zur axialen Fixierung der Bremsscheibe (1) abdecken.

14. Bremsscheiben- /Nabenverbindung nach Anspruch 12 oder 13, **dadurch gekennzeichnet, dass** das erste Zwischenelement (3) und das jeweils zweite Zwischenelement (4) formschlüssig miteinander verbunden sind.

15. Bremsscheiben- /Nabenverbindung nach Anspruch 13 oder 14, **dadurch gekennzeichnet, dass** an einem den seitlichen Schenkeln (31, 32) der ersten Zwischenelemente (3) nahen Bereich der Trennflächen (34) Öffnungen (36) ausgebildet sind, durch die sich im montierten Zustand jeweils eine Nase (43) eines der zweiten Zwischenelemente (4) erstreckt, wobei die Nase (43) sich von dem dem zweiten Schenkel (41) beabstandeten Ende des ersten Schenkels (42) erstreckt.

16. Bremsscheiben- /Nabenverbindung nach einem der vorstehenden Ansprüche, **dadurch gekennzeichnet, dass** an einer dem Radflansch (21) der Nabe (2) abgewandten Seite der Mitnehmer (22) ein Federelement (5) befestigbar ist, zur axialen Fixierung der ersten Zwischenelemente (3) und/oder der zweiten Zwischenelemente (4).

17. Bremsscheiben- /Nabenverbindung nach einem der vorstehenden Ansprüche, **dadurch gekennzeichnet, dass** die Nabe (2) einen sich radial zur Drehachse (A) nach außen erstreckenden Radflansch (21) aufweist, von dem sich die Mitnehmer (22) axial zur Drehachse (A) erstrecken.

18. Bremsscheiben- /Nabenverbindung nach Anspruch 17, **dadurch gekennzeichnet, dass** die Nabe (2) einen topfartigen, hohlzylindrischen Abschnitt (27) aufweist, der in den sich radial zur Drehachse (A) nach außen erstreckenden Radflansch (21) übergeht, wobei die Mitnehmer (22) durch sich von dem topfartigen Abschnitt (27) radial nach außen erhebende und sich axial zum Radflansch (21) hin erstreckende Stege (26) abgestützt sind.

## Claims

1. Brake disc-hub connection, wherein a hub (2) has drivers (22) which extend from a wheel flange (21) of the hub (2) in the axial direction relative to a axis of rotation (A) common to a brake disc (1) and the hub (2) and which engage in a tooth-like manner between supporting elements (12) which are arranged on the inner circumference of a brake disc (1) and which extend in the direction of the axis of rotation (A), wherein lateral flanks (23) of the drivers (22) are oriented radially or at least approximately radially to the axis of rotation (A) and lateral flanks (15) of the supporting elements (12) are oriented parallel to the lateral flanks (23) of the drivers (22), wherein the lateral flanks (23) of each of the drivers (22) are oriented at an angle (α) of 15° to 30° to each other, **characterised in that** each of the drivers (22) has slots (251) extending axially in the direction of the wheel flange (21) to form lateral support webs (252), wherein the front faces of the free ends (253) of the support webs (252) are configured as a push-on stop (29) for axially locating the brake disc (1).

2. Brake disc-hub connection according to claim 1, **characterised in that** a recess (14) each is formed at the inner circumference of the brake disc (1) between side flanks of two supporting elements (12) remote from a respective driver (22) as viewed in the circumferential direction for ventilating the brake disc (1) and the hub (2).

3. Brake disc-hub connection according to any of the preceding claims, **characterised in that** the drivers (22) are configured as front ends of support webs (25) extending axially away from the wheel flange (21).

4. Brake disc-hub connection according to any of the preceding claims, **characterised in that** a push-on stop (29) is integrally formed on at least one of the lateral flanks (23) of each of the drivers (22), for axially locating the brake disc (1).

5. Brake disc-hub connection according to any of the preceding claims, **characterised in that** first intermediate elements (3) are arranged in the intermediate spaces between the lateral flanks (15, 23) of the drivers (22) and the supporting elements (12), said first intermediate elements encompassing the drivers (22) in a radial and U-shaped manner in the circumferential direction and bearing at least against the opposing flanks (23) of the drivers (22) in a planar manner.

6. Brake disc-hub connection according to claim 5, **characterised in that** second intermediate elements (4) are arranged between the lateral flanks (15) of the supporting elements (12) and the arms (31, 32) of the first intermediate elements (3) bearing against the lateral flanks (23) of the drivers (22), said second intermediate elements being capable of being mounted separately from the first intermediate elements (3).

7. Brake disc-hub connection according to claim 6, **characterised in that** the first intermediate elements (3) and the second intermediate elements (4) are arranged so as to be displaceable relative to one another axially relative to the axis of rotation (A).

8. Brake disc-hub connection according to claim 6 or 7, **characterised in that** the second intermediate elements (4) are configured as angled elements with two arms (41, 42) oriented at an angle, in particular at right angles, to one another, wherein in the mounted state a first arm (42) is clamped between the lateral flank (15) of one of the supporting elements (12) and the lateral flank (31, 32) of one of the first intermediate elements (3) and a second arm (41) bears against the front face of the supporting element (12) remote from the wheel flange (21) of the hub (2).

9. Brake disc-hub connection according to any of claims 6 to 8, **characterised in that** the first intermediate elements (3) and the second intermediate elements (4) consist of a non-rusting material or are provided with a non-rusting coating and or have an anti-seize coating.

10. Brake disc-hub connection according to any of claims 5 to 9, **characterised in that** the first intermediate elements (3) the first intermediate elements (3) form a separating layer between the brake disc (1) and the hub (2) in the region of the brake disc-hub connection.

11. Brake disc-hub connection according to claim 10, **characterised in that** the free ends of the arms (31, 32) of the first intermediate elements (3) extending approximately radially to the axis of rotation (A) are configured as separating webs (35) bent back outwardly and extending axially to the axis of rotation (A), in each case a lower face (16) of the supporting elements (4) extending axially to the axis of rotation (A) or a lower edge of the first arm (42) of the second intermediate element (4) being able to be supported on said separating webs.

12. Brake disc-hub connection according to claim 11, **characterised in that** the transitions between the separating webs (35) and the arms (31, 32) extending approximately radially to the axis of rotation (A) are configured as depressions (37), the lower edge of the first arm (42) of the second intermediate element (4) being able to be supported in said depressions by being inserted therein.

13. Brake disc-hub connection according to any of claims 10 to 12, **characterised in that** separating surfaces (34) are integrally formed on the lateral arms (31, 32) of the first intermediate elements (3), on a side facing the wheel flange (21) of the hub (2) oriented parallel to the plane of the brake disc (1), which in each case cover one of the push-on stops (29) for axially locating the brake disc (1).

14. Brake disc-hub connection according to claim 12 or 13, **characterised in that** the first intermediate element (3) and the respective second intermediate element (4) are positively connected together.

15. Brake disc-hub connection according to claim 13 or 14, **characterised in that** openings (36) are formed on a region of the separating surfaces (34) in the vicinity of the lateral arms (31, 32) of the first intermediate elements (3), in each case a nose (43) of one of the second intermediate elements (4) extending therethrough in the assembled state, wherein the nose (43) extends from the end of the first arm (42) remote from the second arm (41).

16. Brake disc-hub connection according to any of the preceding claims, **characterised in that** a spring element (5) is able to be fastened on a side of the drivers (22) remote from the wheel flange (21) of the hub (2), for axially locating the first intermediate elements (3) and/or the second intermediate elements (4).

17. Brake disc-hub connection according to any of the preceding claims, **characterised in that** the hub (2) has a wheel flange (21) extending radially outwards to the axis of rotation (A), the drivers (22) extending axially therefrom relative to the axis of rotation (A).

18. Brake disc-hub connection according to claim 17, **characterised in that** the hub (2) has a pot-like hollow cylindrical portion (27) which merges with the wheel flange (21) extending radially outwards to the axis of rotation (A), wherein the drivers (22) are supported by webs (26) rising radially outwards from the pot-like portion (27) and extending axially toward the wheel flange (21).

## Revendications

1. Liaison disque de frein/moyeu, dans laquelle un moyeu (2) a des entraîneurs (22) qui s'étendent depuis un flasque (21) de roue du moyeu (2) dans une direction axiale par rapport à un axe (A) de rotation commun au disque (1) de frein et au moyeu (2) et qui pénètrent, à la manière d'une dent, entre des éléments (12) d'appui s'étendant dans la direction de l'axe (A) de rotation sur le pourtour intérieur d'un disque (1) de frein, des flancs (23) latéraux des entraîneurs (22) étant dirigés radialement, ou au moins à peu près radialement à l'axe (A) de rotation et des flancs (15) latéraux des éléments (12) d'appui parallèlement aux flancs (23) latéraux des entraîneurs (22), les flancs (23) latéraux de chacun des entraîneurs (22) faisant un angle (α) de 15° à 30° entre eux,
**caractérisée en ce que**
chacun des entraîneurs (22) a, pour la formation d'entretoises (252) latérales d'appui, des fentes (251) s'étendant axialement dans la direction du flasque (21) de roue, les côtés frontaux des extrémités (253) libres des entretoises (252) d'appui étant constitués en butée (29) d'immobilisation axiale du disque (1) de frein.

2. Liaison disque de frein/moyeu suivant la revendication 1, **caractérisée en ce qu'**il est formé sur le pourtour intérieur du disque (1) de frein, considéré dans la direction périphérique, entre des flancs latéraux, éloignés d'un entraîneur (22), de deux éléments (12) d'appui, un évidement (14) servant à la ventilation du disque (1) de frein et du moyeu (2).

3. Liaison disque de frein/moyeu suivant l'une des revendications précédentes, **caractérisée en ce que** les entraîneurs (22) sont constitués sous la forme d'extrémité avant d'entretoises (25) d'appui s'étendant en s'éloignant axialement du flasque (21) de roue.

4. Liaison disque de frein/moyeu suivant l'une des revendications précédentes, **caractérisée en ce qu'**il est formé, sur au moins l'un des flancs (23) latéraux de chacun des entraîneurs (22), une butée (29) d'immobilisation axiale du disque (1) de frein.

5. Liaison disque de frein/moyeu suivant l'une des revendications précédentes, **caractérisée en ce que**, dans des espaces intermédiaires entre les flancs (15, 23) latéraux des entraîneurs (22) et des éléments (12) d'appui, sont disposés des premiers éléments (3) intermédiaires, qui entourent les entraîneurs (22) radialement et en forme de u dans la direction périphérique et qui s'appliquent par une surface au moins sur les flancs (23) opposés l'un à l'autre des entraîneurs (22).

6. Liaison disque de frein/moyeu suivant la revendication 5, **caractérisée en ce qu'**il est disposé, entre les flancs (15) latéraux des éléments (12) d'appui et sur des branches (31, 32), s'appliquant aux flancs (23) latéraux des entraîneurs (22), des premiers éléments (3) intermédiaires, des deuxièmes éléments (4) intermédiaires pouvant être montés séparément des premiers éléments (3) intermédiaires.

7. Liaison disque de frein/moyeu suivant la revendication 6, **caractérisée en ce que** les premiers éléments (3) intermédiaires et les deuxièmes éléments (4) intermédiaires sont montés coulissants les uns par rapport aux autres axialement par rapport à l'axe (A) de rotation.

8. Liaison disque de frein/moyeu suivant les revendications 6 ou 7, **caractérisée en ce que** les deuxièmes éléments (4) intermédiaires sont constitués sous la forme d'éléments d'équerre ayant deux branches (41,42) dirigées suivant un angle, notamment à angle droit, l'une par rapport à l'autre, dans lequel, dans l'état monté, une première branche (42) est serrée entre les flancs (15) latéraux de l'un des éléments (12) d'appui et les flancs (31,32) latéraux de l'un des premiers éléments (3) intermédiaires et une deuxième branche (41) s'applique au côté frontal, éloigné du flasque (21) de roue du moyeu (2), de l'élément (12) d'appui.

9. Liaison disque de frein/moyeu suivant l'une des revendications 6 à 8, **caractérisée en ce que** les premiers éléments (3) intermédiaires et les deuxièmes éléments (4) intermédiaires sont en un matériau inoxydable ou sont pourvus d'un revêtement inoxydable et/ou d'un revêtement d'anti-grippage.

10. Liaison disque de frein/moyeu suivant l'une des revendications 5 à 9, **caractérisée en ce que** les premiers éléments (3) intermédiaires forment, dans la région de la liaison disque de frein/moyeu une couche de séparation entre le disque (1) de frein et le moyeu (2).

11. Liaison disque de frein/moyeu suivant la revendication 10, **caractérisée en ce que** les extrémités libres des branches (31, 32), s'étendant à peu près radialement par rapport à l'axe (A) de rotation des premiers éléments (3) intermédiaires, sont constituées sous la forme de réglettes (35) de séparation, courbées vers l'extérieur et s'étendant axialement par rapport à l'axe (A) de rotation, sur lesquelles un côté (16), inférieur et s'étendant axialement par rapport à l'axe de rotation, des éléments (4) d'appui ou une arête inférieure de la première branche (42) du deuxième élément (4) intermédiaire peut s'appuyer.

12. Liaison disque de frein/moyeu suivant la revendication 11, **caractérisée en ce que** les transitions entre les réglettes (35) de séparation et les branches (31, 32), s'étendant à peu près radialement par rapport à l'axe (A) de rotation, sont constituées sous la forme de bosses (37) rentrantes dans lesquelles l'arête inférieure de la première branche (42) du deuxième élément (4) intermédiaire peut s'appuyer en s'y insérant.

13. Liaison disque de frein/moyeu suivant l'une des revendications 10 à 12, **caractérisée en ce que**, sur les branches (31, 32) latérales des premiers éléments (3) intermédiaires, sont formées d'un côté, tourné vers le flasque (21) de roue du moyeu (2), des surfaces (34) de séparation, qui sont dirigées parallèlement au plan du disque (1) de frein et qui recouvrent l'une des butées (29) d'immobilisation axiale du disque (1) de frein.

14. Liaison disque de frein/moyeu suivant les revendications 12 ou 13, **caractérisée en ce que** le premier élément (3) intermédiaire et le deuxième élément (4) intermédiaire sont reliés entre eux à complémentarité de forme.

15. Liaison disque de frein/moyeu suivant les revendications 13 ou 14, **caractérisée en ce que**, sur l'une des branches (31, 32) latérales des premiers éléments (3) intermédiaires sont formés, dans une région proche des surfaces (34) de séparation, des ouvertures (36) dans lesquelles, à l'état monté, un bec (43) de l'un des deuxièmes éléments (4) intermédiaires s'étend, le bec (43) s'étendant depuis l'extrémité, à distance de la deuxième branche (41), de la première branche (42).

16. Liaison disque de frein/moyeu suivant l'une des revendications précédentes, **caractérisée en ce que**, d'un côté de l'entraîneur (22) éloigné du flasque (21) de roue du moyeu (2), peut être fixé un élément (5) à ressort pour l'immobilisation axiale des premiers éléments (3) intermédiaires et/ou des deuxièmes éléments (4) intermédiaires.

17. Liaison disque de frein/moyeu suivant l'une des revendications précédentes, **caractérisée en ce que** le moyeu (2) a un flasque (21) de roue, s'étendant vers l'extérieur radialement par rapport à l'axe (A) de rotation et à partir duquel les entraîneurs (22) s'étendent axialement par rapport à l'axe (A) de rotation.

18. Liaison disque de frein/moyeu suivant la revendication 17, **caractérisée en ce que** le moyeu (2) a une partie (27) cylindrique creuse de type en pot, qui se transforme en le flasque (21) de roue s'étendant vers l'extérieur radialement par rapport à l'axe (A) de rotation, les entraîneurs (22) étant soutenus par des entretoises (26) s'étendant axialement vers le flasque (21) de roue et soulevant, radialement vers l'extérieur, la partie (27) de type en pot.
